# EUROPÄISCHE PATENTANMELDUNG

(11) **EP 0 893 162 A2**
(43) Veröffentlichungstag der Anmeldung: **27.01.1999**
(21) Anmeldenummer: 98113636.9
(22) Anmeldetag: 22.07.1998
(51) Int. Cl.: B05B 15/12

(54) **Verfahren und Vorrichtung zum Entfernen von Lackoverspray-Partikeln aus einer wässrigen Trübe**

(30) Priorität: 26.07.1997 DE 19732207
(71) Anmelder: OLT Oberflächen-, Luft- und Trocknungstechnik GmbH, 48629 Metelen (DE)
(72) Erfinder: Vollmer, Heinz Georg, D-48493 Wettringen (DE)
(74) Vertreter: Hoffmeister, Helmut, Dr. Dipl.-Phys.

(57) **Zusammenfassung**

Zur Vereinfachung des Entfernens von Lackoverspray-Partikeln aus einer wäßrigen Trübe, wobei eine hohe Betriebssicherheit geboten und Überschwemmungen vermieden werden, werden folgende Verfahrensschritte vorgeschlagen:
(a) Aus einer fließberuhigten Trübe (10) wird das Sediment am Boden eines ersten Behälters (4) zur Ablagerung gebracht, während aufschwimmende Partikel auf der Oberfläche der Trübe (10) verbleiben,
(b) das Sediment (2) wird unter Absenkung des Trübenspiegels (6) in einen zweiten Behälter (7) ausgespült und konzentriert,
(c) der Trübenspiegel (6) wird anschließend angehoben und die Trübe (10) derartig zum Überlauf über eine Fließkante (9) gebracht, daß der aufschwimmende Anteil (1) der Lackoverspray-Partikel abgeschwemmt wird,
(d) das gereinigte Trübenwasser (10) wird abgelassen.

## Beschreibung

Die Erfindung betrifft ein Verfahren zum Entfernen von Lackoverspray-Partikeln aus einer wäßrigen Trübe, wobei die Lackoverspray-Partikel sowohl in aufschwimmender als auch in dispergierter als auch in getauchter, koagulierter Form vorliegen, wobei zumindest die dispergierten und getauchten Lackoverspray-Partikel sedimentieren und anschließend ausgetragen werden. Die Erfindung betrifft ferner eine Vorrichtung zur Durchführung des Verfahrens mit wenigstens einem Sedimentationsbehälter.

Lackoverspray-Partikel werden naß ausgewaschen und gelangen in Entschlammungsanlagen. Aus der DE 93 04 854 U1 ist eine Vorrichtung zum Trennen von Farbschlamm und Wasser für eine Farbnebelabscheideanlage bekannt. Hierbei lagert sich das Sediment einer fließberuhigten Trübe am Boden des Behälters ab, während die aufschwimmenden Partikel auf der Oberfläche der Trübe verbleiben. Der aufschwimmende Teil der Partikel wird von einem Förderer mit einem Schöpfwerk entfernt. Der abgelagerte Lackschlamm wird vom Grund des Behälters über einen absperrbaren Sumpf mit Förderpumpen entfernt und das gereingte Trübenwasser wird abgelassen. Nachteilig ist, daß es beim Austrag des Sediments oder beim Abschöpfen der aufschwimmenden Partikel von der Oberfläche der Trübe bei nicht einwandfrei entklebten Lacken zu Agglomerationen von Lackpartikeln und Aushärtungen und damit zu Blockaden und Überlastung der Getriebemotoren der Bagger bzw. Pumpen kommt. Auch ist bei geöffnetem Zulauf ein Überfluten des Behälters nicht ausgeschlossen, so daß das Befüllen des Behälters andauernd, beispielsweise visuell oder durch Niveaumelder, überwacht werden muß.

Weiterhin ist aus der DE 39 23 437 A1 ein Verfahren und eine Vorrichtung zum Lackieren bekannt, bei der das Sediment von einem ersten in einen zweiten Behälter über eine die Behälter verbindende Leitung ausgespült und dann im zweiten Behälter konzentriert werden kann. Es ist wiederum von Nachteil, daß das Gemisch aus Wasser und klebfähigen Lackpartikeln durch leicht verstopfende Bauteile wie Filter, Düsen und Pumpen geleitet wird, wodurch es wiederum zu Agglomerationen und Verklebungen und damit zum Ausfall der genannten Baugruppen kommen kann. Auch kann das Sediment aus dem Sumpf des zweiten Behälters nur mittels eines Sammelkorbs entfernt werden. Die Entnahme und Reinigung des Sammelkorbes kann nur manuell und bei Stillstand der Anlage erfolgen, so daß sich allein hierdurch wirtschaftliche Nachteile ergeben.

Aus der DE 38 37 638 A1 ist es bekannt, den Trübenspiegel im Behälter durch Aufstauen mittels eines beweglichen Wehrschiebers anzuheben und eine Schwimmstoffschicht aus Fetten, hochviskosen Ölen und anderen schwimmfähigen Stoffen über eine Überfallkante zu dekantieren. Aufgrund der erforderlichen beweglichen, der Trübe ausgesetzten Teile des Wehrschiebers eignet sich das Verfahren nicht für die Abscheidung klebfähiger Lackpartikel, da mit Verklebungen der mechanischen Führungen des Wehrschiebers zu rechnen ist. Partikel, die nicht aufschwimmen, sondern sedimentieren, können hierdurch nicht entfernt werden.

Es stellt sich demnach die Aufgabe gegenüber dem Stand der Technik, ein Verfahren und eine Vorrichtung anzugeben, die das Entfernen von Lackoverspray-Partikeln aus einer wäßrigen Trübe erleichtern, die eine hohe Betriebssicherheit bieten und Überschwemmungen sicher vermeiden.

Diese Aufgabe wird gelöst bei einem Verfahren der eingangs genannten Art mit folgenden Schritten:
a) aus einer fließberuhigten Trübe wird das Sediment am Boden eines ersten Behälters zur Ablagerung gebracht, während aufschwimmende Partikel auf der Oberfläche der Trübe verbleiben,
b) das Sediment wird unter Absenkung des Trübenspiegels in einen zweiten Behälter ausgespült und konzentriert,
c) der Trübenspiegel wird anschließend angehoben und die Trübe derartig zum Überlauf über eine Fließkante gebracht, daß der aufschwimmende Anteil der Lackoverspray-Partikel abgeschwemmt wird,
d) das gereinigten Trübenwasser wird abgelassen.

Das Verfahren arbeitet demnach grundsätzlich mit zwei nebeneinanderliegenden Behältern, von denen der erste die Trübe aufnimmt und absetzen läßt, wobei in demselben Behälter die Möglichkeit geboten wird, durch einfaches Anheben des Trübenspiegels den aufschwimmenden Anteil der Lackoverspray-Partikel abzuschwemmen, der dann in den zweiten Behälter gelangt.

Die vorgenannten Schritte (a) bis (c) können teilweise auch zeitlich überlappend durchgeführt werden, so daß ein quasi kontinuierliches Verfahren zum Entfernen von Lackoverspray-Partikeln gegeben ist.

Auf eine Ablaufpumpe für die zu transportierenden Sediment-Mengen kann verzichtet werden, wenn das Sediment mittels eines hydrostatischen Druckgefälles vom ersten in den zweiten Behälter gefördert wird, wobei die Zuhilfnahme einer Pumpe nicht erforderlich ist.

Dabei wird vorgeschlagen, daß das aus der fließberuhigten Trübe abgelagerte Sediment vor der Mündung eines bis kurz vor dem tiefsten Punkt des Bodens des ersten Behälters endenden Rohres abspülbereit zur Ablagerung gebracht wird. Das Rohr nimmt bei Durchlaufschaltung eines entsprechenden Ventils dann das Sediment mit einem Minimum an Schwemmwasser auf.

Das in den zweiten Behälter überführte Sediment kann insbesondere durch Pressen entwässert werden. Es ist aber auch möglich, zum Entwässern hier Schlamm-Rütteleinrichtungen und Filtersiebe u. dgl. zu verwenden.

Eine Vorrichtung zur Durchführung des Verfahrens umfaßt folgende Einzelteile:
a) den ersten Sedimentationsbehälter, in dem aus einer fließberuhigten Trübe das Sediment an dessen Boden sedimentierbar ist, während aufschwimmende Partikel auf der Oberfläche der Trübe verbleiben,
b) einen zweiten Behälter, der mit dem ersten Behälter über ein Spülrohr verbunden ist, mit deren Hilfe das Sediment aus dem ersten Behälter unter Absenkung des Trübenspiegels ausspülbar ist,
c) eine Fließkante im oberen Bereich des ersten Sedimentionsbehälters, über den die Trübe zum Überlaufen bringbar ist,
d) eine an den ersten Sedimentionsbehälter angeschlossene Rücklaufleitung, über die das gereinigte Trübenwasser ablaßbar ist.

Die vorgenannten Einzelteile ermöglichen es, das Verfahren mit einem Minimum an Aufwand durchzuführen. Das Spülrohr, das mittels eines hydrostatischen Druckgefälles das Sediment befördern soll, ist vorzugsweise mit einem fernbetätigbaren Membranventil versehen.

Ein ähnliches Ventil ist auch in einer Rücklaufleitung vorgesehen.

Besonders vorteilhaft ist, daß der zweite Behälter mit einem Überlauf ausgestattet ist, der in einer Rücklaufleitung endet. Bei dieser Ausführungsform kann selbst bei anfallenden Übermengen an Trübe und Ausfall von Pump- und Leitungsfunktionen es zu keiner Überschwemmung kommen, da die Rücklaufleitung zu einem Rücklauf der Trübe in das Hauptsystem führt. Die vorgenannten Rücklaufleitungen enden vorzugsweise alle in einem Sammelbecken für die aus der Sprayanlage fließende Trübe.

Als besonders günstige Konstruktion zur Aufnahme des Sedimentes hat sich ein Spitzkegelboden erwiesen, der im ersten Behälter um die Mündung des kurz vor dem tiefsten Punkt des im ersten Behälter endenden Rohres angeordnet ist.

Zum gleichmäßigen Einfließen der Trübe mit den Lackoverspray-Partikeln hat sich ein nach oben offenes Verteilrohr erwiesen, das zentrisch zum Sedimentationsbehälter angeordnet ist und dessen Durchmesser wenigstens zweimal so groß ist wie der Durchmesser des Zulaufrohres. Hierdurch erfolgt eine gleichmäßige Auffüllung des ersten Sedimentationsbehälters ohne große Aufwirbelung des abzusetzenden Sedimentes.

Entsprechend den zu erwartenden Absetz- und Reaktionszeiten können die Ventile und Pumpen von einer speicherprogrammierten Steuerung gesteuert werden, so daß ein quasi automatischer Ablauf gegeben ist.

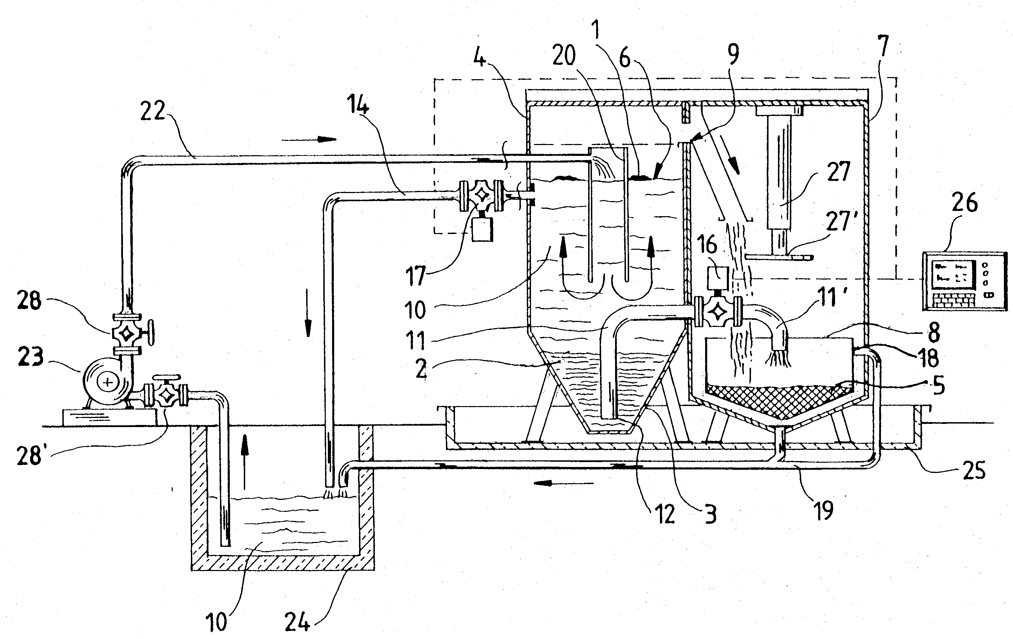

Ein Ausführungsbeispiel der Erfindung ist in der **Figur** dargestellt. Die Figur zeigt in schematischer Ansicht eine Vorrichtung zur Durchführung eines Verfahrens zum Entfernen von Lackoverspray-Partikeln.

Aus einem Wassersammelbecken, das einer Lackieranlage (nicht dargestellt) zugeordnet ist, wird eine wäßrige Trübe 10 mit Hilfe einer Pumpe 23 über ein Zulaufrohr 22 zu dem ersten Sedimentationsbehälter 4 gefördert. Zentrisch in diesem Sedimentationsbehälter ist ein nach oben offenes Verteilrohr 20 angeordnet, dessen Durchmesser etwa viermal so groß ist wie der Durchmesser des Zulaufrohres 22. Die in das Verteilrohr 20 einfließende Trübe verteilt sich daher hauptsächlich an den Wänden des ersten Sedimentationsbehälters 4 und bildet eine laminare, abfließende Strömung aus.

Die Zuleitung 22 kann vor und nach der Umwälzpumpe 23 durch Schieber 28, 28' geöffnet und geschlossen werden.

Der untere Teil des ersten Sedimentationsbehälters 4 endet als Spitzkegelboden 3, in den sich ein Sediment 2 aus der Trübe 10 ablagern kann. In den Spitzkegelboden 3 ragt das untere Ende eines U-förmigen Rohres hinein, das als Spülrohr 11 bezeichnet wird. Kurz vor dem tiefsten Punkt des Spitzkegelbodens 3 endet das Spülrohr 11, so daß sich das abgelagerte Sediment 2 vor der Mündung 12 des bis kurz vor dem tiefsten Punkt des Bodens 3 endenden Rohres 11 abspülbereit zur Ablagerung gebracht wird.

Das Spülrohr 11 geht unterhalb des Trübenspiegels 6 in einen zweiten Behälter 7 über. Hier endet es in einem Rohrstutzen 11', aus dem der Sediment-Schlamm gemäß Fallrichtung herausströmt.

Oberhalb des Schlammspiegels ist eine Lackschlammpresse 27 angebracht, mit der das Wasser aus dem Sedimentationsschlamm herausgedrückt und in einen Überlauf 18 und eine Rücklaufleitung 19 hineingedrückt wird, die wiederum das herausgedrückte Wasser zu dem Wassersammelbecken 24 leitet.

Die Zwischenwand zwischen den beiden Behältern 4 und 7 ist nach oben hin offen, so daß sich eine Fließkante 9 ergibt. Steigt der Trübenspiegel 6 bis in die Höhe der Fließkante 9, so läuft die Trübe über die Fließkante 9, so daß der aufschwimmende Anteil 1 der Lackoverspray-Partikel in den Innenbehälter 8 des zweiten Behälters 7 abgeschwemmt wird. Das gereinigte Trübenwasser kann aus dem Behälter 4 über eine Leitung 14 abgelassen werden, wobei ein Membranventil 17 die Ableitung steuert.

In einer besonders vorteilhaften Ausführungsform ist der zweite Behälter 7 mit einem entnehmbaren Innenbehälter 8 ausgestattet. Dieser Innenbehälter kann beispielsweise ein auf Schienen verfahrbarer Lackschlammcontainer sein, so daß der angefallene Lackschlamm einfach der Vorrichtung zu entnehmen und der weiteren Behandlung zuzuführen ist.

Weiterhin ist eine speicherprogrammierbare Steuerung 26 vorgesehen, mit der die Ventile je nach Erfordernis steuerbar sind.

Die **Funktion** der vorbeschriebenen Vorrichtung und die einzelnen Verfahrensschritte sind wie folgt:

Zunächst sind die Ventile 16 und 17 geschlossen. Die Schieber 28, 28' sind geöffnet; die Pumpe 23 wird in Betrieb gesetzt. Aus dem Wassersammelbecken 24 wird das mit Lackschlamm in aufschwimmender, in dispergierter und in getauchter, koagulierter Form versetzte Trübenwasser durch die Leitung 22 in den Behälter eingepumpt, bis der Trübenspiegel 6 das Niveau der Fließkante 9 erreicht hat. Anschließend bleibt die Trübe über einen Zeitraum von etwa dreißig Minuten in Ruhe, so daß sich der sedimentierende Schlamm auf den Spitzkegelboden um die Mündung 12 des Spülrohres 11 herum absetzen kann. Dann wird das Ventil 16 geöffnet. Durch hydrostatischen Druck nach dem Prinzip der kommunizierenden Röhren fließt sofort mit erheblicher Geschwindigkeit und unter Mitnahme des abgeleiteten Sedimentes ein Sedimentationsschlamm in den zweiten Behälter 7 und lagert sich im unteren Bereich des Innenbehälters 8 ab. Nach dem Überfließen wird das Ventil 16 geschlossen.

Durch weiteres Einleiten von Trübe durch die Leitung 22 hebt sich der Trübenspiegel 6 wieder, bis er die Fließkante 9 erreicht und etwas darübersteht. Hierbei fließt die Trübe derartig über die Fließkante 9, daß der aufschwimmende Anteil 1 der Lackoverspray-Partikel in den zweiten Behälter 7 mit Innenbehälter 8 abgeschwemmt wird. Etwaiges überstehendes Wasser wird durch den Überlauf 18 dekantiert und fließt zum Wassersammelbecken 24 zurück. Überdies wird der Stempel 27' der Schlammpresse 27 nach unten bewegt und drückt weitgehend das mitgeführte Wasser aus dem Sedimentationsschlamm 5.

Der Innenbehälter 8 kann vom Behälter 7 abgekoppelt und mit seinem Inhalt abgefahren werden. Es ist auch möglich, die Einheit aus den Behältern 4,7 und/oder 8 mobil zu machen und die Inhalte abzufahren.

Wesentlich ist weiterhin, daß eine Überflutung des Systems auch bei Ausfall einer Funktion nicht möglich ist. Bei Überfüllung des Sedimentationsbehälters 4 läuft das Wasser über die Fließkante 9 in den Innerbehälter 8 des zweiten Behälters 7 und dort über einen Überlauf 18 und die Rücklaufleitung 19 zum Wassersammelbecken 24 zurück. Diese Funktion wird ohne steuernde Niveaumelder erreicht.

Üblicherweise ist die gesamte Vorrichtung gemäß **Figur** in eine Sicherheitswanne 25 als Auffangwanne gestellt, um auf jeden Fall Kontaminationen zu vermeiden.

### Bezugszeichenliste

- 1: aufschwimmende Partikel
- 2: Sediment
- 3: Spitzkegelboden
- 4: erster Behälter
- 5: Sedimentationsschlamm
- 6: Trübenspiegel
- 7: zweiter Behälter
- 8: Innenbehälter
- 9: Fließkante
- 10: wäßrige Trübe
- 11: Spülrohr
- 11': Rohrstutzen
- 12: Mündung
- 13:
- 14: Rücklaufleitung
- 15:
- 16: Membranventil Spülleitung
- 17: Membranventil Rücklaufleitung
- 18: Überlauf
- 19: Rücklaufleitung
- 20: Verteilrohr
- 21:
- 22: Zulaufrohr
- 23: Umwälzpumpe
- 24: Wassersammelbecken
- 25: Sicherheitswanne
- 26: SPS
- 27: Lackschlammpresse
- 28, 28': Schieber

## Patentansprüche

1. Verfahren zum Entfernen von Lackoverspray-Partikeln aus einer wäßrigen Trübe (10), wobei die Lackoverspray-Partikel sowohl in aufschwimmender als auch in dispergierter als auch in getauchter, koagulierter Form vorliegen, wobei zumindest die dispergierten und getauchten Lackoverspray-Partikel sedimentieren und anschließend ausgetragen werden, mit folgenden Schritten:
(a) aus einer fließberuhigten Trübe (10) wird das Sediment am Boden eines ersten Behälters (4) zur Ablagerung gebracht, während aufschwimmende Partikel auf der Oberfläche der Trübe (10) verbleiben,
(b) das Sediment (2) wird unter Absenkung des Trübenspiegels (6) in einen zweiten Behälter (7) ausgespült und konzentriert,
(c) der Trübenspiegel (6) wird anschließend angehoben und die Trübe (10) derartig zum Überlauf über eine Fließkante (9) gebracht, daß der aufschwimmende Anteil (1) der Lackoverspray-Partikel abgeschwemmt wird,
(d) das gereinigten Trübenwasser (10) wird abgelassen.

2. Verfahren nach Anspruch 1, dadurch gekennzeichnet, daß die Schritte (a) bis (c) teilweise zeitlich überlappend durchgeführt werden.

3. Verfahren nach Anspruch 1 oder 2, dadurch gekennzeichnet, daß das Sediment (2) mittels eines hydrostatischen Druckgefälles vom ersten in den zweiten Behälter (4; 7) ohne Zuhilfenahme einer Pumpe gefördert wird.

4. Verfahren nach Anspruch 1 oder 2, dadurch gekennzeichnet, daß das aus der fließberuhigten Trübe (10) abgelagerte Sediment (2) vor der Mündung (12) eines bis kurz vor dem tiefsten Punkt des Bodens (3) des ersten Behälters (4) endenden Spülrohres (11) abspülbereit zur Ablagerung gebracht wird.

5. Verfahren nach wenigstens einem der vorhergehenden Ansprüche, dadurch gekennzeichnet, daß das in den zweiten Behälter (7) überführte Sediment (2) durch Pressen entwässert wird.

6. Vorrichtung zur Durchführung des Verfahrens nach einem oder mehreren der Ansprüche 1 bis 5, mit folgenden Einzelteilen:
(a) den ersten Sedimentationsbehälter (4), in dem aus einer fließberuhigten Trübe (10) das Sediment (2) an dessen Boden (3) sedimentierbar ist, während aufschwimmende Partikel (1) auf der Oberfläche der Trübe verbleiben,
(b) einen zweiten Behälter (7), der mit dem ersten Behälter (4) über ein Spülrohr (11) verbunden ist, mit deren Hilfe das Sediment (2) aus dem ersten Behälter (4) unter Absenkung des Trübenspiegels (6) ausspülbar ist,
(c) eine Fließkante (9) im oberen Bereich des ersten Sedimentationsbehälters (4), über den die Trübe (10) zum Überlaufen bringbar ist,
(d) eine an den ersten Sedimentationsbehälter (4) angeschlossene Rücklaufleitung (14), über die das gereinigte Trübenwasser ablaßbar ist.

7. Vorrichtung nach Anspruch 6, dadurch gekennzeichnet, daß das Spülrohr (11) vollständig unterhalb des Trübenspiegels (6) verläuft.

8. Vorrichtung nach Anspruch 6 oder 7, dadurch gekennzeichnet, daß das Spülrohr (11) mit einem fernbetätigbaren Membranventil (16), versehen ist.

9. Vorrichtung nach wenigstens einem der Ansprüche 6 bis 8, dadurch gekennzeichnet, daß die Rücklaufleitung (14) mit einem fernbetätigbaren Membranventil (17), versehen ist.

10. Vorrichtung nach wenigstens einem der Ansprüche 6 bis 9, dadurch gekennzeichnet, daß der zweite Behälter (7) mit einer Lackschlammpresse (27) und/oder einer Schlamm-Rütteleinrichtung und einem Filtersieb ausgestattet ist.

11. Vorrichtung nach wenigstens einem der Ansprüche 6 bis 10, dadurch gekennzeichnet, daß der zweite Behälter (7) mit einem Überlauf (18) und einer Rücklaufleitung (19) ausgestattet ist.

12. Vorrichtung nach wenigstens einem der vorhergehenden Ansprüche 6 bis 11, dadurch gekennzeichnet, daß der zweite Behälter (7) mit einem entnehmbaren Innenbehälter (8) ausgestattet ist.

13. Vorrichtung nach wenigstens einem der vorhergehenden Ansprüche 6 bis 12, dadurch gekennzeichnet, daß wenigstens eine der Rücklaufleitungen (14; 19) in einem Wassersammelbecken (24) für die aus der Sprayanlage fließende Trübe endet.

14. Vorrichtung nach wenigstens einem der vorhergehenden Ansprüche 7 bis 12, dadurch gekennzeichnet, daß der erste Behälter (4) einen um die Mündung (12) des kurz vor dem tiefsten Punkt des Bodens (3) des ersten Behälters (4) endenden Spülrohres (11) angeordneten Spitzkegelboden (3) aufweist.

15. Vorrichtung nach wenigstens einem der vorhergehenden Ansprüche 6 bis 14, dadurch gekennzeichnet, daß die Trübe (10) in den ersten Sedimentationsbehälter (4) über ein zentrisch zum Sedimentationsbehälter angeordnetes, nach oben offenes Verteilrohr (20) einleitbar ist, dessen Durchmesser wenigstens zweimal so groß ist wie der Durchmesser des Zulaufrohres (22).

16. Vorrichtung nach wenigstens einem der vorhergehenden Ansprüche 6 bis 15, dadurch gekennzeichnet, daß die Ventile (16; 17) über eine speicherprogrammierbare Steuerung (26) steuerbar sind.
